(19) Europäisches Patentamt / European Patent Office / Office européen des brevets

(11) **EP 1 835 750 A1**

(12) **EUROPEAN PATENT APPLICATION**

(43) Date of publication:
**19.09.2007 Bulletin 2007/38**

(51) Int Cl.:
*H04N 7/26* (2006.01)     *H04N 7/50* (2006.01)

(21) Application number: **06300240.6**

(22) Date of filing: **17.03.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Thomson Licensing
92100 Boulogne (FR)**

(72) Inventors:
• **Zhu, Li Hua, 8F, Bldg. A
Hai Dian District, 100085 Beijing (CN)**
• **Xu, Long, Rm 8-9, 8F, Bldg. A,
Hai Diaan District, 100085 Beijing (CN)**
• **Chen, Zhi Bo, (F, Bldg. A,
Hai Dian District, 100085 Beijing (CN)**

(74) Representative: **Hartnack, Wolfgang
Deutsche Thomson-Brandt GmbH
European Patent Operations
Karl-Wiechert-Allee 74
30625 Hannover (DE)**

(54) **Rho domain rate control and coding mode selection for H.264**

(57)     The TMN8 model for ISO/IEC 14496-10 AVC uses a frame-layer rate control and a macroblock-layer rate control. However, it is to difficult to distribute in the macroblock layer rate control the available bit budget between the texture coding and the overhead coding of the selected macro-block mode and motion vectors. For smoothing the visual quality, the inventive bit rate control uses a pre-analysis p-domain rate control model, thereby forming a mapping between quantisation parameter QP and $\rho$ and a mapping between QP and distortion. A PID characteristic or filter is applied for controlling the distortion in the bit allocation. Advantageously, the computational complexity is low.

Fig.1

**Description**

The invention relates to a method and to an apparatus for determining for bit rate control in picture signal encoding the bit allocation for macroblocks and a quantisation parameter to be applied for a quantisation of corresponding transform coefficient blocks.

Background

The TMN8 bit rate control for ISO/IEC 14496-10 AVC (H.264) uses a frame-layer bit rate control to select a target number of bits for the current frame, and a macroblock-layer bit rate control to select the values of the quantisation step sizes for the macroblocks in that frame. In the frame-layer bit rate control a target number B of bits for the current frame is determined by:

$$B = R/F - \Delta$$

$$\Delta = \begin{cases} W/F, & W > Z{*}M \\ W{-}Z{*}M & \text{otherwise} \end{cases}$$

$$W = \max(W_{prev}{+}B_{prev}{-}R/F, \ 0),$$

wherein B is the target number of bits for a frame (including the bits for quantised transform coefficients, motion vectors and header information), R is the channel rate in bits per second, F is the frame rate in frames per second, W is the number of bits in the encoder buffer, $Z = 0.1$ is set as a default value to achieve a low delay, M is a maximum value indicating buffer fullness that is set by default to $R/F$, $W_{prev}$ is the previous number of bits in the encoder buffer, and $B_{prev}$ is the actual number of bits used for encoding the previous frame.

The frame target bit rate B varies depending on the type of video frame, e.g. I, P or B, on the buffer fullness and on the channel throughput. If W is greater than 10% of $M$, $B$ is slightly decreased. Otherwise, B is slightly increased.

The macroblock-layer bit rate control selects the values of the quantisation step sizes $Q_{step}$ for all the macroblocks in a current frame so that the sum of the bits used for these macroblocks is close to the frame target bit rate B. The different values of $Q_{step}$ are indexed by a quantisation parameter value QP. For MPEG4 AVC, QP may have one of 52 levels between 0 and 51. For example, QP = 0, 3, 6, 10, 18 and 51 correspond to quantisation step sizes of 0.625, 0.875, 1.25, 2,5 and 224, respectively.

The TMN8 rate control is described in ITU-T, Video codec Test model, near-term, version 8 (TMN8), H.263 AdHoc Group, Portland, June 1997, and in J.Ribas-Corbera, S.Lei, "Rate Control in DCT Video Coding for Low-Delay Communications", IEEE Trans. on CSVT, Vol.9, No.1, February 1999.

In the ISO/IEC 14496-10 AVC (H.264) encoding it is to difficult to distribute in the macroblock???? layer bit rate control the available bit budget between the texture coding and the overhead coding of the selected macro-block mode and motion vectors when using known bit rate control methods. To solve this problem, a Lagrangian coder control can be incorporated into the H.264/AVC coder. However, the Lagrangian coder control demands the quantisation parameter QP to be evaluated before the intra/inter prediction, thus leading to a dilemma because until the end of the intra/inter prediction the rate control scheme cannot access the exact coding characteristics, which in turn is indispensable for the calculation of the quantisation parameter. Such dilemma prevents the rate control scheme from directly accessing the coding characteristic in advance. To solve this dilemma, in the JVT reference source code for H.264/AVC the rate control algorithms proposed by Z.G.Li, W.Gao, F.Pan, S.Ma, K.P.Lim, G.Feng, X.Lin, S.Rahardja, H.Lu and Y.Lu, "Adaptive Rate Control with HRD Consideration," JVT-H014, 8th meeting, Geneva, May 20-26, 2003, denoted [1], and Z.G.Li, F.Pan, K.P.Lim, X.Lin and S.Rahardja, "Adaptive Rate Control for H.264," ICIP 2004, denoted [2], have been recommended by the JVT committee.

However, these two rate control algorithms have large bit rate control errors in case of brightness flashes or fade in/out sequences. The visual quality is unstable because of too much differing QPs between adjacent macroblocks. Moreover, the rate control in [2] employs the information of the previous units, therefore it does not fit for encoding abrupt changes of scene contents.

A two-pass scheme is proposed in [1], where a TM5-like (Test Model 5) method is used in each pass. If the first pass fails to obtain an appropriate quantisation parameter, then a second pass will be conducted as a refinement, which consequently increases the computational complexity.

Because of its disadvantages,[1] was replaced by [2] as the standardised rate control scheme for H.264/AVC. In [2], spatio-temporal correlations are exploited to circumvent the above dilemma, whereby a linear MAD model (mean absolute difference) is employed to predict the coding complexity, and the conventional MPEG-4 Q2 rate control model is employed to calculate the quantisation parameter. Nevertheless, spatio-temporal correlations are not sufficiently well utilised, and so result in a weak prediction for the coding characteristic.

In "ρ-Domain Rate-Distortion Analysis and Rate Control for Visual Coding and Communication", PhD Dissertation, University of California, Santa Barbara, June 2001, denoted[3], Zhihai He proposed a rate control model called ρ-domain, which shows a good performance for rate control in H.263 and MPEG4-2 codecs. The p value is the percentage of DCT zero-amplitude coefficients among the quantised DCT coefficients. Z.He has found a linear relationship between the p value and the real bit rates, i.e. that percentage of zeros plays an important role in the final bit rate control. He assumed that the distribution of residual coefficients complies with either Gaussian distribution or Laplace distribution, and that the relation between bit rate R and p can be described by:

$$R(\rho) = \theta * (1 - \rho) \qquad\qquad (1)$$

wherein theta is the slope of the linear model. In patent application EP 05300424.8 a pre-analysis ρ-domain rate control model for MPEG4-10 AVC has been proposed. A two-step bit rate control is used whereby in the first step six mapping tables have been designed to realise the mapping between the quantisation parameters QP and the percentage of DCT zero coefficients, which can not only improve the mapping accuracy, but also shorten the computation time. Secondly, a detailed analysis of the DCT level is carried to get the slope of the linear model between the bit rate and the percentage of zeros. Finally, the slope of the linear model has been constrained by a look ahead method based on neighbour frames or blocks.

Invention

A good bit rate control is very important for video compression. However, the above rate control schemes do not control the resulting picture quality in a smooth way although the final bit rate is controlled in a smooth way. The known MPEG4 AVC rate control methods lead to a flickering visual perception for constant bit rate (CBR) rate control applications, caused by the dithering of the distortion. Even for variable bit rate (VBR) applications the visual perception is not a smooth resulting picture quality. Known research on bit rate control for making the picture quality smooth involves a high complexity but can not be applied to real-time video encoding for customer applications.

A problem to be solved by the invention is to provide an improved bit rate control that can be used in MPEG4-10 AVC and achieves a high picture quality even in CBR applications. This problem is solved by the method disclosed in claim 1. An apparatus that utilises this method is disclosed in claim 2.

The inventive bit rate control uses a pre-analysis ρ-domain bit rate control model, and in the procedure of producing the zero-amplitude transform coefficients it forms a mapping between the mean squared error (MSE) and the quantisation parameter QP. The MSE in turn can be mapped directly to the peak signal-to-noise ratio (PSNR) representing the visual quality. After building the relation between distortion and QP and the relation between QP and p, a proportional-integral-derivative (PID) characteristic or filter is applied for controlling the distortion. The proportional factor represents the distortion of the previous same-type frame, the integral factor represents the average of the summed-up distortion values of the past frame, and the derivative factor represents the distortion difference between the previous same-type frame and the current frame. This PID filter makes the distortion distribution within the frames smooth under the constraint of constant bit rates. Advantageously, the computational complexity is low because the result of a table is used to build the p-QP table between distortion and quantisation parameter, and the PID computation occurs only at frame level and can be carried out using only adding and subtraction???? operations. The inventive bit rate control provides not only a smooth video quality control but also achieves the requirement of CBR (constant bit rate control) real-time video coding, and it can also easily incorporated into real-time VBR (variable bit rate control) video coding.

In principle, the inventive method is suited for determining for bit rate control in picture signal encoding the bit allocation for blocks, into which the picture is divided, and a quantisation parameter to be applied for a quantisation of corresponding transform coefficient blocks, and wherein a bit budget is given for the encoded picture and the picture encoding types include intra coded and inter coded, said method including the steps:

- for blocks in pictures to be intra coded, performing an intra prediction and transforming the corresponding residual block into a corresponding block of transform coefficients, and for blocks in pictures to be inter coded, performing a motion estimation and an inter prediction and transforming the corresponding residual block into a corresponding block of transform coefficients;

- establishing for each one of said blocks of transform coefficients at least one table for intra coding or at least one table for inter coding, respectively, representing a mapping between different candidate values of said quantisation parameter and the corresponding number of zero-amplitude transform coefficients resulting from a quantisation of the blocks of transform coefficients using said candidate quantisation parameter values, and establishing for said blocks of transform coefficients at least one table representing a mapping between different candidate values of said quantisation parameter and the corresponding distortion values;
- calculating a target bit allocation for each one of said blocks of transform coefficients, thereby using a proportional-integral-derivative filtered output from said at least one table representing a mapping between different candidate values of said quantisation parameter and the corresponding distortion values;
- using said target bit allocation, calculating an actual QP value to be applied for each block and performing a rate-distortion optimisation, using said at least one table representing a mapping between different candidate values of said quantisation parameter and the corresponding number of zero-amplitude transform coefficients, for determining the coding mode to be selected for each block.

In principle the inventive apparatus is suited for determining for bit rate control in picture signal encoding the bit allocation for blocks, into which the picture is divided, and a quantisation parameter to be applied for a quantisation of corresponding transform coefficient blocks, and wherein a bit budget is given for the encoded picture and the picture encoding types include intra coded and inter coded, said apparatus including:

- means being adapted for performing, for blocks in pictures to be intra coded, an intra prediction and for transforming the corresponding residual block into a corresponding block of transform coefficients, and for performing for blocks in pictures to be inter coded, a motion estimation and an inter prediction and for transforming the corresponding residual block into a corresponding block of transform coefficients;
- means being adapted for establishing for each one of said blocks of transform coefficients at least one table for intra coding or at least one table for inter coding, respectively, representing a mapping between different candidate values of said quantisation parameter and the corresponding number of zero-amplitude transform coefficients resulting from a quantisation of the blocks of transform coefficients using said candidate quantisation parameter values, and being adapted for establishing for said blocks of transform coefficients at least one table representing a mapping between different candidate values of said quantisation parameter and the corresponding distortion values;
- means being adapted for calculating a target bit allocation for each one of said blocks of transform coefficients, thereby using a proportional-integral-derivative filtered output from said at least one table representing a mapping between different candidate values of said quantisation parameter and the corresponding distortion values;
- means being adapted for calculating, using said target bit allocation, an actual QP value to be applied for each block and for performing a rate-distortion optimisation, using said at least one table representing a mapping between different candidate values of said quantisation parameter and the corresponding number of zero-amplitude transform coefficients, for determining the coding mode to be selected for each block.

Advantageous additional embodiments of the invention are disclosed in the respective dependent claims.

<u>Drawings</u>

Exemplary embodiments of the invention are described with reference to the accompanying drawings, which show in:

Fig. 1 flowchart of the inventive bit rate control process;
Fig. 2 relations between QP and rho;
Fig. 3 scatter diagram for estimated and real distortion;
Fig. 4 PID filter;
Fig. 5 encoder block diagram.

<u>Exemplary embodiments</u>

*A) 16x16 macroblock analysis and look-up tables mapping for ρ-QP table and QP-distortion table*

*A.1) Pre-processing stage*

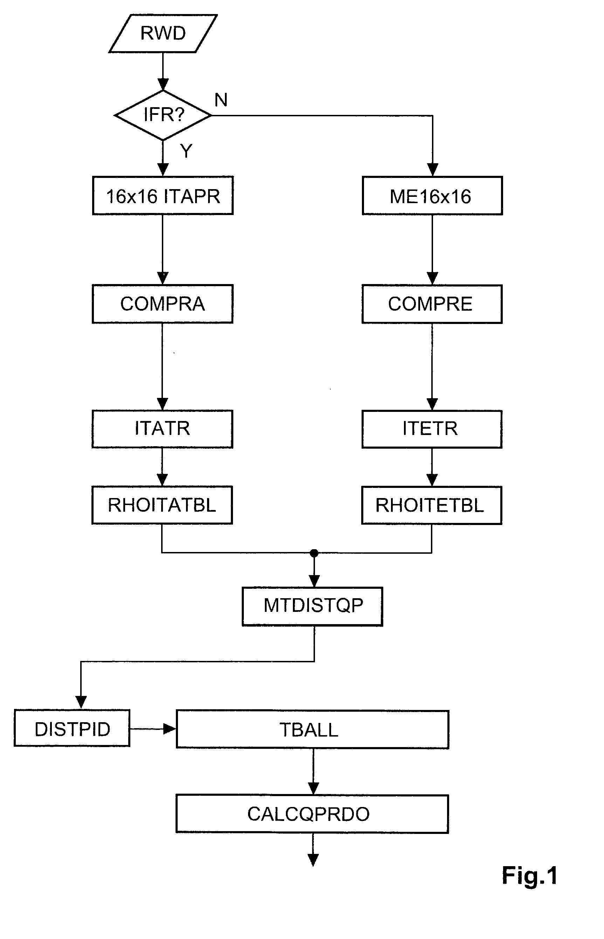

According to Fig. 1, raw data RWD is input to the processing and it is checked in step IFR whether or not an I frame processing is to be performed.
If true, a 16*16 pixel block intra prediction 16*16ITAPR is carried out on macroblocks for this frame, because in practical MPEG4 AVC encoding, for an I frame a 16*16-intra prediction only is carried out, using three modes: DC prediction, horizontal prediction and vertical prediction. For a current time instant, the reconstructed intra macro-block is unavailable. Therefore it is important to find a good estimation for the intra macroblock to be reconstructed, i.e. for computing I frame predictions. After many experiments it was found that the picture content of the original frame can be used as the reconstruction.
With this intra prediction, the residual block is computed in step or stage COMPRA according to the best prediction direction. The corresponding result blocks form the residuum of each macroblock, which residuum is transformed or DCT transformed into the frequency domain by an intra transform step or stage ITATR, whereby the corresponding output transform coefficients are produced.
If the current frame is not an I frame, a 16*16 pixel block motion estimation step or stage ME16*16 is carried out on the macroblocks for this frame and then, after applying the motion vectors found in a prediction, the corresponding residual block is computed in a step or stage COMPRE. The corresponding result block is transformed or DCT transformed into the frequency domain by an intra transform step or stage ITETR, whereby the corresponding output transform coefficients are produced.

*A.2) Look-up tables mapping between rho (ρ) and QP*

Thereafter in step or stage RHOITATBL a mapping takes place between the intra transform coefficients and the quantisation parameter QP in order to get candidate $\rho_I$-values (i.e. the number or percentage of zero transform coefficients, or a fraction from '1') for the current I block as a function of QP. In step or stage RHOITETBL a mapping takes place between the inter transform coefficients and the quantisation parameter QP in order to get candidate $\rho_P$-values (i.e. the number or percentage of zero transform coefficients, or a fraction from '1') for the current P or B block as a function of QP. This adapted rho-domain processing for real-time bit rate control can be applied directly in practical applications. A couple of mapping tables are established (cf. patent application EP 05300424.8) to realise the mapping between the quantisation parameters QP and the percentage of transform zero coefficients.
The $\rho_I$-values and the $\rho_P$-values are calculated according to:

$$\rho_I(QP) = P(QP)_{\text{intra}} = \frac{1}{M} \sum_{x \in IntraMB} (\text{if}(|x| < itable(i,j,QP)))$$

$$\rho_P(QP) = P(QP)_{\text{inter}} = \frac{1}{M} \sum_{x \in InterMB} (\text{if}(|x| < table(i,j,QP))) \quad (2)$$

wherein M is the number of coefficients in the current macroblock (i.e. generally the number of luminance pixel values per macroblock is 16*(4*4) = 256 and the number of chrominance pixel values per macroblock (for 4:2:0 format) is two times 4*(4*4) = 128, resulting in 384 pixel values per macroblock), x is the transform coefficient at 4*4 transform block position i (0...3) and j (0...3), *itable* and *table* are threshold values for deciding if the current coefficient x is zero for intra coefficients and inter coefficients, respectively.
The goal is to get for each set of transformed macroblock values in the video sequence the function or relationship between a candidate QP and the resulting number of zero amplitude transform coefficients following quantisation.
The look-up table output is a corresponding QP number between k='0' and k='51'. For example, if the current transform coefficient belongs to position (0,????) in an intra block and $Q_{step}$=2 (which can be mapped into a corresponding QP index), only transform coefficients having a magnitude value '1' can become quantised to zero. For $Q_{step}$=3, only transform coefficients having the magnitude values '2' and '1' can become quantised to zero. Thus, when using the tables in patent application EP 05300424.8, it can easily be determined for a block of transform values how many of them will become zero if a specific QP value is applied in the quantisation.
After getting the number of transform coefficients which have been mapped to each QP, the total number of zero coefficients can be summed up step by step. For example, the total number of zero coefficients mapped to QP=2 is equal to the sum of the total number of zero coefficients mapped to QP=1 and the total number of transform coefficients having a magnitude corresponding to the $Q_{step}$ value assigned to QP=2. The total number of zero coefficients mapped to QP=3 is equal to the sum of the total number of zero coefficients mapped to QP=2 and the total number of transform coefficients having a magnitude corresponding to the $Q_{step}$ value assigned to QP=3.

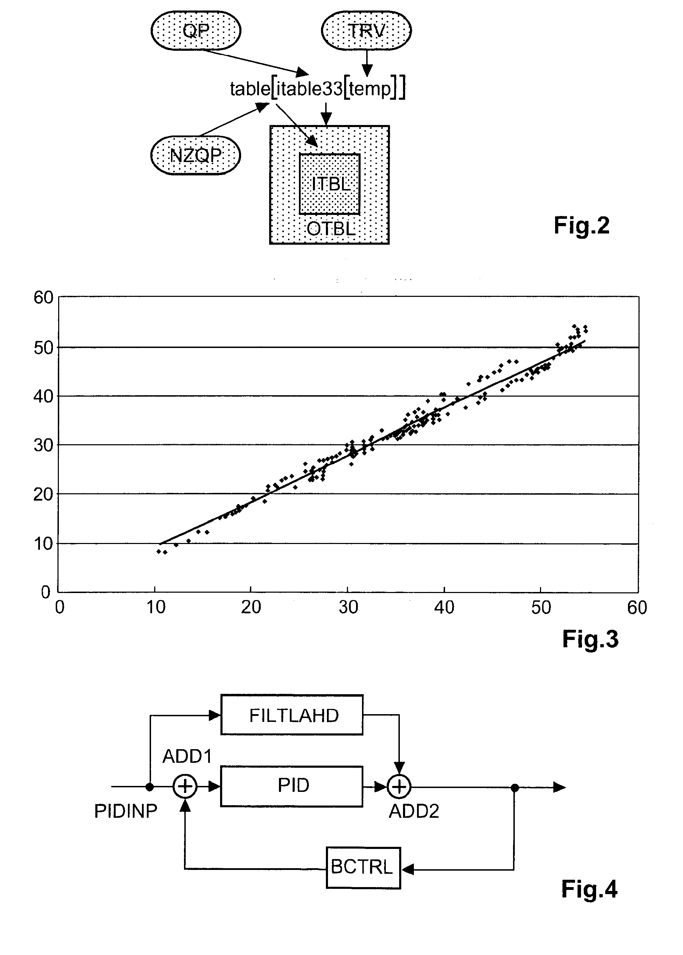

The table processing is further illustrated by Fig. 2. The tables which receive the transform values TRV and output the quantisation parameter QP can be regarded as inner table ITBL. The actual number NZQP of zero amplitude coefficients for a given QP is calculated using the tables which can be regarded as outer table OTBL.

*A.3) Look-up tables mapping between QP and distortion*

In the procedure of look-up tables mapping between rho (p) and QP, the number of zero coefficients corresponding to each QP can be computed easily in distortion/QP mapping table calculation step or stage MTDISTQP in Fig. 1, and then the number of zero coefficients corresponding to each QP is determined by summing up step by step, for example: Firstly, the number of zero coefficients (denoted as $n$1) is determined when QP=1. Secondly, the remaining coefficients (i.e. except the coefficients already quantised to zero in the first step) are quantised using QP=2, and accordingly, the number of zero coefficients (denoted as n2') for the remaining coefficients in the second step is determined. Thirdly, the number of zero coefficients for QP=2 is determined finally by (n1+n2').

In other words, for QP=2, by including the number of zero coefficients when applying quantisation by QP=2 and the number of zero coefficients when applying quantisation by QP=1; for QP=3, by including the number of zero coefficients when applying quantisation by QP=3 and the number of zero coefficients when applying quantisation by QP=2 and the number of zero coefficients when applying quantisation by QP=1. In practice, the distortion for the current macroblock can be derived directly by the look-up-table. One can get the number of coefficients being quantised to zero when QP=1, and the number of coefficients being quantised to zero when QP=2, and so on for QP=3, 4, 5, .... Therefore the distortion for the coefficients that are smaller than $Q_{step}$ (corresponding to the set QP) can be addressed according to equation (3) when a QP has been applied, whereby the look-up table is the same as the look-up table between rho and QP and therefore no extra computation is required:

$$ZeroCoeffDistortion_{QP=k} = Look\_up\_Table[QP=1]*Qstep_1^2 +$$

$$Look\_up\_Table[QP=2]*Qstep_2^2 +$$

$$...+Look\_up\_Table[QP=k]*Qstep_k^2 \qquad (3)$$

The number of coefficients which are greater than $Q_{step}$ (corresponding to the QP currently set) can be addressed according to equation (4), wherein *Total Coefficients InMB* means the total number of coefficients in a macroblock:

$$NonZeroCoeffDistortion_{QP=k} =$$

$$(TotalCoeffInMB - \sum_{i}^{k} Look\_up\_Table[QP=i])*Qstep_k^2 /12 \qquad (4)$$

The total distortion corresponding to the value $Q_{step}$ can be got by summing up *ZeroCoeffDistortion* and *NonZeroCoeffDistortion*. For MPEG4 AVC, the distortion corresponding to each QP value from '1' to '51' follows immediately:

$$TotalDistortion_{QP=k} =$$

$$NonZeroCoeffDistortion_{QP=k} + ZeroCoeffDistortion_{QP=k} \qquad (5)$$

Advantageously, the analysis of the distortion by using the above processing, although it is relatively simple, approximates the real distortion corresponding to the given QP.

Fig. 3 depicts the estimated distortion versus the real distortion and shows that the approximation is a good one (y =0.9376 x, $R^2$ = 0.9848) and that the error between the analysis distortion and the real distortion is very small.

For a given target bit rate the rho value can be computed by formula (1), and the corresponding QP to be applied in the encoding of a macroblock can be read from the rho-QP look-up table, and the corresponding distortion can be read from the QP-Distortion look-up table. Thereby, for any given bit rate for a current frame, the distortion of that coded frame is known in advance.

*B) Proportional-Integral-Derivative (PID) model for smooth visual quality*

The output signal from the distortion/QP mapping table calculation step or stage MTDISTQP passes through a PID distortion calculation step or stage DISTPID. PID (Proportional, Integral, Derivative) control loops use industry standard algorithms for calculating an appropriate response to an input signal for controlling an output signal.

In order to keep the PSNR (distortion) distribution smooth, a PID controller according to Fig. 4 is used in DISTPID. For smoothing the visual quality, which is supposed to be represented by PSNR, the distortion (MSE) should be smoothed firstly, and according to the invention a PID model or filter is used to achieve such result. The input signal PIDINP, which is the distortion of the previously coded frame (coming from step or stage MTDISTQP in Fig. 1), is fed to a look-ahead distortion filter FILTLAHD, where a number of data (the distortion of the frame) is selected. The input signal PIDINP is also fed via a first adder ADD1 to a step or stage PID the function of which is explained in detail below. The output signals of steps/stages PID and MTDISTQP are combined in a second adder ADD2, and are fed back to the first adder ADD1 via a back controller step or stage BCTRL that regulates the distortion of the previous frame input.

In equations (6), (7) and (8), Kp, Ki and Kd are the factors of proportional gain, integral gain and derivative gain, respectively. An increased Kp value increases the system control accuracy, however, an overlarge Kp value will decrease it. By increasing the Ki value the system steady-state will be improved, however, an overlarge Ki value will decrease the control accuracy. An increased Kd value will increase the system response time because Kd relates to a differential operator.

The proportional gain (P-gain) is used to calculate the proportional component of the routine. This component increases in direct proportion to the distortion $Distortion_{pre}$ of the previous frame

$$P \; = \; Distortion_{pre} * Kp \tag{6}$$

The integral gain (I-gain) is used to calculate the integral component of the PID filter. The integral component represents the average amount of distortion for the previous frame:

$$I \; = \; [(\sum_{k=0}^{N} Distortion_{k} / N) * Ki] \tag{7}$$

wherein k is the running macroblock number in the previous frame and N is the total number of macroblocks per frame.

The derivative gain (D-gain) attempts to control the distortion level at which the distortion of the current frame can be adjusted in case a special picture content occurs, such as scene change, high-motion picture segments and fade-in/fade-out:

$$D = [(Dist_{cur} - Dist_{pre}) * Kd] \tag{8}$$

wherein $Dist_{cur}$ is the distortion of the current frame and $Dist_{pre}$ is the distortion of the previous frame.

The final distortion *Distortion* of the current frame can be estimated according to formula (9). It can be used for the following frame for getting the target bit rate, and a clipping to the ideal bit rate can be performed which prevents coding buffer overflow and underflow:

$$Distortion \; = \; P + I + D \tag{9}$$

The output signal of step/stage DISTPID is used in a target bit allocation step or stage TBALL for determining the final bit allocation for the frame. That bit allocation is used in a following step or stage CALCQPRDO for calculating the actual QP value $Q_{Pact}$ by looking up the ρ-QP table and then applying $QP_{act}$ for the macroblocks, and for performing a rate-distortion optimisation with respect to the coding mode to be selected for each macroblock. For the further processing e.g. the TMN8 model can be used, or the bit rate control derived from TMN8 as described in patent application EP 05300424.8.

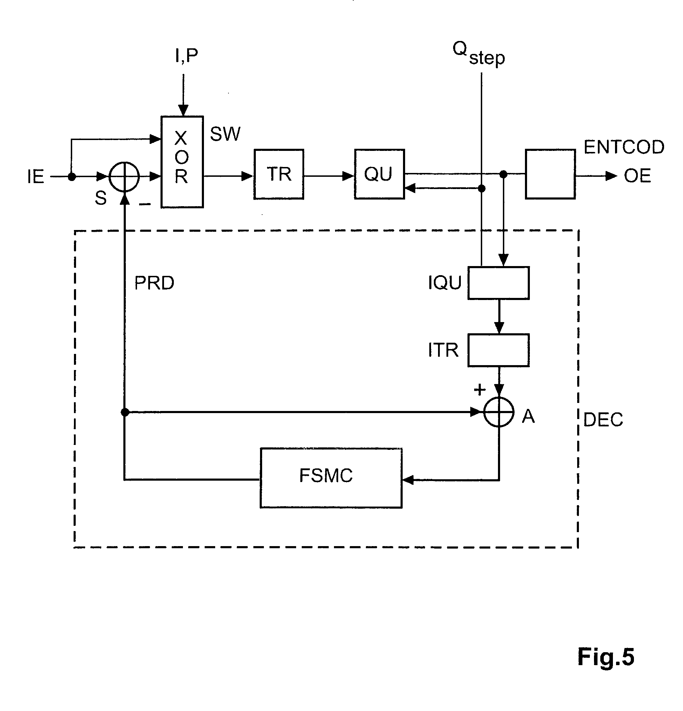

In Fig. 5 the video data input signal IE includes block or macroblock data to be encoded. In case intraframe (I) data are to be encoded, subtractor S passes the video input data via a transformer TR (computing e.g. a DCT transform) and a quantiser Q to an entropy encoder ENTCOD that delivers the encoder video data output signal OE. In case interframe (P, B), i.e. non-intra frame, data are to be encoded, subtractor S subtracts predicted block or macroblock data PRD from the input signal IE and passes the difference data via transformer TR and quantiser Q to entropy encoder ENTCOD. The switching between the intraframe and interframe modes is carried out by a corresponding switch SW that may be implemented by an XOR function. The output signal of Q is also fed to an inverse quantiser IQU, the output signal of which passes through an inverse transformer ITR to an adder A and represents reconstructed block or macroblock difference data. The output signal of adder A is intermediately stored in frame store and motion compensation means FSMC which also perform motion compensation on reconstructed block or macroblock data and which deliver such predicted block or macroblock data PRD to subtractor S and to the other input of adder A.

Quantiser Q and inverse quantiser IQU are controlled by the current quantiser step size $Q_{step}$, or quantisation parameter QP, which is calculated as described above. It is also possible that FSMC does not perform motion compensation. Inverse quantiser IQU, inverse transformer ITR and frame store and motion compensation means FSMC represent a decoder DEC.

Instead of operating frame based, the invention can also use field based processing.

**Claims**

1. Method for determining (TBALL, CALCQPRDO) for bit rate control in picture signal encoding the bit allocation for blocks, into which the picture is divided, and a quantisation parameter (QP) to be applied for a quantisation of corresponding transform coefficient blocks, and wherein a bit budget (B) is given for the encoded picture and the picture encoding types include intra coded (I) and inter coded (P, B), **characterised by** the steps:

   - for blocks in pictures to be intra coded, performing an intra prediction (16x16ITAPR) and transforming (ITATR) the corresponding residual block (COMPRA) into a corresponding block of transform coefficients, and for blocks in pictures to be inter coded, performing a motion estimation (ME16x16) and an inter prediction (COMPRE) and transforming (ITETR) the corresponding residual block into a corresponding block of transform coefficients;
   - establishing (RHOITATBL, RHOITETBL) for each one of said blocks of transform coefficients at least one table for intra coding (I) or at least one table for inter coding, respectively, representing a mapping between different candidate values of said quantisation parameter (QP) and the corresponding number (p) of zero-amplitude transform coefficients resulting from a quantisation of the blocks of transform coefficients using said candidate quantisation parameter values *(QP),* and establishing (MTDISTQP) for said blocks of transform coefficients at least one table representing a mapping between different candidate values of said quantisation parameter (QP) and the corresponding distortion values;
   - calculating (TBALL) a target bit allocation for each one of said blocks of transform coefficients, thereby using a proportional-integral-derivative filtered (DISTPID) output from said at least one table representing a mapping between different candidate values of said quantisation parameter (QP) and the corresponding distortion values;
   - using said target bit allocation, calculating (CALCQPRDO) an actual QP value *(QP_{act})* to be applied for each block and performing a rate-distortion optimisation, using said at least one table representing a mapping between different candidate values of said quantisation parameter (*QP*) and the corresponding number (p) of zero-amplitude transform coefficients, for determining the coding mode to be selected for each block.

2. Apparatus for determining for bit rate control in picture signal encoding the bit allocation for blocks, into which the picture is divided, and a quantisation parameter (*QP*) to be applied for a quantisation of corresponding transform coefficient blocks, and wherein a bit budget (B) is given for the encoded picture and the picture encoding types include intra coded (I) and inter coded (P, B), said apparatus including:

   - means (16x16ITAPR, ITATR, COMPRA; ME16x16, COMPRE, ITETR) being adapted for performing, for blocks in pictures to be intra coded, an intra prediction and for transforming the corresponding residual block into a corresponding block of transform coefficients, and for performing for blocks in pictures to be inter coded, a motion estimation and an inter prediction and for transforming the corresponding residual block into a corresponding block of transform coefficients;

- means (RHOITATBL, RHOITETBL, MTDISTQP) being adapted for establishing for each one of said blocks of transform coefficients at least one table for intra coding (I) or at least one table for inter coding, respectively, representing a mapping between different candidate values of said quantisation parameter (QP) and the corresponding number (p) of zero-amplitude transform coefficients resulting from a quantisation of the blocks of transform coefficients using said candidate quantisation parameter values (QP), and being adapted for establishing for said blocks of transform coefficients at least one table representing a mapping between different candidate values of said quantisation parameter (QP) and the corresponding distortion values;

- means (TBALL, DISTPID) being adapted for calculating a target bit allocation for each one of said blocks of transform coefficients, thereby using a proportional-integral-derivative filtered output from said at least one table representing a mapping between different candidate values of said quantisation parameter (QP) and the corresponding distortion values;

- means (CALCQPRDO) being adapted for calculating, using said target bit allocation, an actual QP value ($QP_{act}$) to be applied for each block and for performing a rate-distortion optimisation, using said at least one table representing a mapping between different candidate values of said quantisation parameter (QP) and the corresponding number (p) of zero-amplitude transform coefficients, for determining the coding mode to be selected for each block.

3. Method according to claim 1, or apparatus according to claim 2, wherein said encoded picture is part of an ISO/IEC 14496-10 AVC encoded picture sequence.

4. Method according to claim 1 or 3, or apparatus according to claim 2 or 3, wherein said quantisation parameter (QP) is a quantiser step size.

5. Method according to one of claims 1, 3 and 4, or apparatus according to one of claims 2 to 4, wherein said block is a macroblock.

6. Method according to one of claims 1 and 3 to 5, or apparatus according to one of claims 2 to 5, wherein in said proportional-integral-derivative filtering (DISTPID) an proportional factor ($Kp$) represents the distortion of the previous same-type frame, an integral factor ($Ki$) represents the average of the summed-up distortion values of the past frame, and an derivative factor ($Kd$) represents the distortion difference between the previous same-type frame and the current frame.

7. A digital video signal that is encoded using the method of one of claims 1 and 3 to 6.

8. Storage medium, for example on optical disc, that contains or stores, or has recorded on it, a digital video signal encoded according to the method of one of claims 1 and 3 to 6.

Fig.1

**Fig.2**

**Fig.3**

**Fig.4**

**Fig.5**

**European Patent**
**Office**

**EUROPEAN SEARCH REPORT**

Application Number

EP 06 30 0240

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HE Z ET AL: "LOW-PASS FILTERING OF RATE-DISTORTION FUNCTIONS FOR QUALITY SMOOTHING IN REAL-TIME VIDEO COMMUNICATION" IEEE TRANSACTIONS ON CIRCUITS AND SYSTEMS FOR VIDEO TECHNOLOGY, IEEE SERVICE CENTER, PISCATAWAY, NJ, US, vol. 15, no. 8, August 2005 (2005-08), pages 973-981, XP001233658 ISSN: 1051-8215 * abstract * Section II., page 974 | 1-6 | INV. H04N7/26 H04N7/50 |
| X | Section IV., subsection A. and B., page 976 Section VI., page 978 ----- | 7,8 | |
| A | CHI-WAH WONG ET AL: "PID-based real-time rate control" MULTIMEDIA AND EXPO, 2004. ICME '04. 2004 IEEE INTERNATIONAL CONFERENCE ON TAIPEI, TAIWAN JUNE 27-30, 2004, PISCATAWAY, NJ, USA,IEEE, vol. 1, 27 June 2004 (2004-06-27), pages 221-224, XP010770784 ISBN: 0-7803-8603-5 | 1-6 | |
| X | * the whole document * ----- | 7,8 | TECHNICAL FIELDS SEARCHED (IPC) H04N |

-/--

The present search report has been drawn up for all claims

| Place of search | Date of completion of the search | Examiner |
|---|---|---|
| The Hague | 22 August 2006 | Colesanti, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

**European Patent Office**

**EUROPEAN SEARCH REPORT**

Application Number

EP 06 30 0240

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZHIHAI HE ET AL: "A Unified Rate-Distortion Analysis Framework for Transform Coding" IEEE TRANSACTIONS ON CIRCUITS AND SYSTEMS FOR VIDEO TECHNOLOGY, IEEE SERVICE CENTER, PISCATAWAY, NJ, US, vol. 11, no. 12, December 2001 (2001-12), XP011014261 ISSN: 1051-8215 | 1-6 | |
| X | Section I., subsection B., pages 1221-1222 Section II., pages 1223-1224 Sections VI. and VII:, pages 1231-1232 ----- | 7,8 | |
| A | SHIN I-H ET AL: "Rate control using linear rate-rho model for H.264" SIGNAL PROCESSING. IMAGE COMMUNICATION, ELSEVIER SCIENCE PUBLISHERS, AMSTERDAM, NL, vol. 19, no. 4, April 2004 (2004-04), pages 341-352, XP004495309 ISSN: 0923-5965 | 1-6 | |
| X | * abstract * Section 2., pages 342-347 with figure 1 ----- | 7,8 | TECHNICAL FIELDS SEARCHED (IPC) |
| A | HYUNGJOON KIM ET AL: "Low-complexity macroblock mode selection for H.264/AVC encoders" IMAGE PROCESSING, 2004. ICIP '04. 2004 INTERNATIONAL CONFERENCE ON SINGAPORE 24-27 OCT. 2004, PISCATAWAY, NJ, USA,IEEE, 24 October 2004 (2004-10-24), pages 765-768, XP010785115 ISBN: 0-7803-8554-3 | 1-6 | |
| X | * the whole document * ----- | 7,8 | |

The present search report has been drawn up for all claims

| Place of search | Date of completion of the search | Examiner |
|---|---|---|
| The Hague | 22 August 2006 | Colesanti, C |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• EP 05300424 A

**Non-patent literature cited in the description**

• *ITU-T, Video codec Test model,* June 1997
• **J.RIBAS-CORBERA ; S.LEI.** Rate Control in DCT Video Coding for Low-Delay Communications. *IEEE Trans. on CSVT,* February 1999, vol. 9 (1
• **Z.G.LI ; W.GAO ; F.PAN ; S.MA ; K.P.LIM ; G.FENG ; X.LIN ; S.RAHARDJA ; H.LU ; Y.LU.** Adaptive Rate Control with HRD Consideration. *JVT-H014, 8th meeting, Geneva,* 20 May 2003
• **Z.G.LI ; F.PAN ; K.P.LIM ; X.LIN ; S.RAHARDJA.** Adaptive Rate Control for H.264. *ICIP,* 2004
• $\rho$-Domain Rate-Distortion Analysis and Rate Control for Visual Coding and Communication. PhD Dissertation. June 2001